# NEUE EUROPÄISCHE PATENTSCHRIFT

(11) **EP 2 893 803 B2**
(45) Veröffentlichungstag und Bekanntmachung des Hinweises auf die Entscheidung über den Einspruch: **08.07.2020**
(45) Hinweis auf die Patenterteilung: 01.02.2017
(21) Anmeldenummer: 14200524.8
(22) Anmeldetag: 28.07.2007
(51) Int. Cl.: A01K 9/00, A01K 5/02

(54) **Fahrbarer Milchbehälter für die Nutztieraufzucht, insbesondere von Kälbern**
Transportable milk container for livestock breeding, in particular for calves
Récipient à lait roulant pour l'élevage d'animaux de la ferme, en particulier de bovins

(30) Priorität: 07.09.2006 DE 202006013899 U
(43) Veröffentlichungstag der Anmeldung: 15.07.2015
(62) Teilanmeldung aus: 07014865.5
(73) Patentinhaber: Holm, Hans-Joachim, 24784 Westerrönfeld (DE); Laue, Hans-Joachim, 24783 Osterrönfeld (DE)
(72) Erfinder: Holm, Hans-Joachim, 24784 Westerrönfeld (DE); Laue, Hans-Joachim, 24783 Osterrönfeld (DE)
(74) Vertreter: Hauck Patentanwaltspartnerschaft mbB

(56) Entgegenhaltungen:
- EP-A- 1 522 217
- DE-A1- 4 405 687
- DE-A1- 19 901 587
- DE-T2- 69 632 502
- DE-U1- 20 305 754
- DE-U1-202005 012 843
- DE-U1-202005 012 843
- DE-U1-202006 013 899
- US-A- 4 181 097
- US-A1- 2005 103 213
- US-B1- 6 276 264

## Beschreibung

Die Erfindung bezieht sich auf einen fahrbaren Milchbehälter für die Nutztieraufzucht, insbesondere von Kälbern, nach dem Oberbegriff des Anspruchs 1.

Ein Milchwagen der eingangs genannten Art ist aus DE 20 2005 012 843 U bekannt geworden. Ein Behälter auf einem fahrbaren Untersatz ist mit einer Pumpe versehen, die mit ihrer Saugseite mit dem Boden des Behälters in Verbindung ist und mit ihrer Abgabeseite mit einer Leitung. Am Ende der Leitung befindet sich eine Füllpistole oder dergleichen, mit der Milch in einen Futterbehälter abgegeben werden kann. Eine Steuervorrichtung ist vorgesehen, mit der die abzugebende Menge bemessen werden kann. Schließlich weist der Behälter auch einen Einlaß auf, der mit dem Abgabeende der Leitung verbindbar ist. Dadurch ist es möglich, die Milch innerhalb des Behälters umzuwälzen. Außerdem läßt sich auf diese Weise Reinigungsflüssigkeit umspülen, um den Behälter nach der Benutzung zu reinigen.

Aus der Druckschrift DE 203 05 754 U1 ist eine stationäre Vorrichtung zum Bereitstellen von flüssigem Nahrungsmittel für Tiere bekannt geworden, bei der zwischen einem Vorratsbehälter und einer Entnahmestelle eine Erhitzung und anschließende Kühlung des Nahrungsmittels im Durchflussverfahren erfolgt.

Aus der Druckschrift DE 199 01 587 A1 ist eine stationäre Vorrichtung zum Füttern von Kälbern bekannt geworden, bei der das in einer Anmischvorrichtung angemischte Flüssigfutter von einer Prozesssteuervorrichtung auf eine gewünschte Temperatur gebracht wird, die höher als eine Fütterungstemperatur ist, die an einem entfernt von der Anmischvorrichtung angeordneten Saugnuckel erwünscht ist. Dadurch soll die Abkühlung des Futters auf dem Weg von der Anmischvorrichtung zum Saugnuckel berücksichtigt werden.

Der Erfindung liegt die Aufgabe zugrunde, den eingangs genannten, bekannten fahrbaren Milchbehälter dahingehend zu verbessern, dass er noch besser an die Fütterungsbedingungen angepasst ist.

Diese Aufgabe wird durch die Merkmale des Anspruchs 1 gelöst.

Bei dem erfindungsgemäßen fahrbaren Milchbehälter weist die Steuervorrichtung einen Mikroprozessor auf, mit dem der Temperatursensor und die Heizvorrichtung verbunden sind. Die Verwendung eines Temperatursensors ist auch bei dem bekannten fahrbaren Milchbehälter vorgesehen. Er dient dazu, dem Benutzer die Temperatur im Milchbehälter anzuzeigen. Bei der Erfindung ist der Temperatursensor alternativ oder zusätzlich mit dem Mikro-prozessor verbunden, damit er über die Heizvorrichtung in Abhängigkeit von der gemessenen Temperatur die Temperatur der Milch im Tank steuern kann. Bei der Erfindung sind ferner ein Zeitgeber und ein Mengengeber vorgesehen. Mit dem Zeitgeber kann der Benutzer die Zeit einstellen, zu welcher eine Aufheizung der Milch zu Pasteurisierungszwecken einsetzen kann. Diese Zeit ist so eingestellt, dass der Benutzer zur Fütterungszeit eine Temperatur der Milch vorfindet, die der Fütterungstemperatur entspricht. Um dies zu erreichen, kann der Mikroprozessor auch "wissen", welche Menge im Tank ist, damit ausgerechnet werden kann, wieviel Zeit vergeht, um z. B. eine bestimmte Menge von Raumtemperatur z. B. auf 70°C zu erwärmen und anschließend z. B. auf 40°C abkühlen zu lassen. Falls die Menge nicht bekannt ist, wird der Heizvorgang rechtzeitig gestartet. Wird die Tränketemperatur erreicht, wird sie durch Nachheizen auf dieser gehalten.

Mit anderen Worten, der Benutzer braucht lediglich maximal zwei Eingaben, z.B. am Vorabend zu machen, damit am nächsten Morgen zur Fütterungszeit die Milch erstens pasteurisiert ist und zweitens die vorgegebene Fütterungstemperatur aufweist. Aus Hygienegründen sollte die Pasteurisierung möglichst nahe an der Fütterungszeit liegen, da insbesondere bei der Erwärmung und dem anschließenden Abkühlen die Entwicklung von Keimen in der Milch beschleunigt abläuft.

Bei dem erfindungsgemäßen Behälter kann auch ein Füllstandsmesser vorgesehen werden. Der Füllstandsmesser misst die jeweilige Menge im Tank und gibt ein Signal an den Mikroprozessor. In diesem Fall ist für den Benutzer lediglich erforderlich, am Vorabend bzw. vor der Fütterungszeit diese entsprechend einzugeben. Es versteht sich, dass es auch möglich ist, die einmal gespeicherte Zeit für mehrere Tage aufrecht zu erhalten, wenn die Fütterungszeit sowie auch die Fütterungsmenge stets gleich sind. Ist das Volumen im Tank unterschiedlich, kann mit Hilfe des Füllstandsmessers eine entsprechende Anpassung vorgenommen werden. Daher ist die Bedienbarkeit für den fahrbaren Milchbehälter extrem vereinfacht. Gleichwohl werden optimale Fütterungsbedingungen für die Tiere bereit gestellt.

Wegen der beschriebenen vermehrten Keimbildung nach dem Verlassen der Pasteurisierungstemperatur ist es vorteilhaft, die Milch rasch abzukühlen. Daher sieht eine weitere Ausgestaltung der Erfindung vor, dass im Tank eine Kühlschlange angeordnet ist und der Tank zwei Anschlüsse aufweist, von denen einer ein steuerbares Ventil aufweist und mit einem Wasseranschluss und der andere mit einem Wasserablauf verbindbar ist. Das steuerbare Ventil wird vom Mikroprozessor geöffnet, wenn die Heizvorrichtung die erste Temperatur eine vorgegebene Zeit gehalten hat. Das Ventil wird geschlossen, wenn die zweite Temperatur erreicht ist.

Es versteht sich, dass auch ein separates Kühlaggregat vorgesehen werden kann, das z. B. mit elektrischer Energie betrieben wird. Der Aufwand hierfür ist jedoch deutlich höher als für eine mit der üblichen Wasserversorgung beschickten Kühlschlange.

Nach einer weiteren Ausgestaltung der Erfindung wird von der Heizvorrichtung die im Tank vorhandene Milch nach dem Abkühlen von der erhöhten ersten Temperatur auf einer vorgegebenen zweiten Temperatur gehalten. Dies geschieht mit Hilfe des Temperatursensors, so dass z. B. die Milch auf 40°C gehalten werden kann, der normalen Fütterungstemperatur. Dies ist für den Fall notwendig, dass z. B. die Fütterungszeit nicht exakt eingehalten und die Fütterung z. B. um ½ Stunde verzögert wird.

Zur Dosierung der Menge abzugebender Milch kann eine Volumen-, Zeit- oder Gewichtssteuerung vorgesehen werden. Nach einer Ausgestaltung der Erfindung ist vorgesehen, dass die Steuervorrichtung eine manuell einstellbare Zeitsteuerung aufweist, insbesondere ein Potentiometer enthält. Mit dem Potentiometer kann die Laufzeit des Motors für die Pumpe vorgewählt werden. Somit kann der Landwirt die Milchmenge pro Kalb und Mahlzeit festlegen, die in der Regel für mehrere Kälber gleich ist.

Die individuelle Milchabgabe bei dem erfindungsgemäßen Behälter soll möglichst einfach und schnell von statten gehen. Bei der Abgabe in einzelne Gefäße für Kälber z. B. werden nur kleine Mengen von etwa 2 bis 3 Litern abgegeben. Eine Ausgestaltung der Erfindung sieht vor, dass ein Bedienelement für einen entsprechenden Schalter, der den Pumpenmotor in Betrieb setzt, an einer Handhabe angebracht ist, mit welcher der Behälter geschoben oder gezogen werden kann. Zu diesem Zweck kann eine deichselartige Handhabe, die jedoch unverschwenkbar am Behälter bzw. dem Fahraufsatz angebracht ist, verwendet werden, wobei ein Bedienelement zweckmäßigerweise in der Nähe eines Giffabschnitts angebracht werden kann. Dadurch kann er betätigt werden, während die das Bedienelement betätigende Hand den Griffabschnitt gleichwohl umfasst. Es können zwei parallel beabstandete Stangen schräg nach oben geführt sein, die an den oberen Enden zu Hornabschnitten umgelenkt sind, wobei die freien Enden der Hornabschnitte einen Abstand voneinander haben. Am einen Ende des Hornabschnitts kann ein Bedienelement in Form eines Tasters oder dergleichen angebracht sein. Eine Signalleitung führt dann vom Taster zu der Steueranordnung im Behälter. So kann z. B. lediglich ein einfacher Tastendruck erforderlich sein, um eine Abgabe in Gang zu setzen Die abzugebende Menge wird dann vorher in geeigneter Weise eingestellt.

Es ist auch denkbar, statt eines relativ kürzeren Schlauches oder eines Galgens zur Abgabe der Milchmengen mit dem Behälter einen längeren Schlauch zu verbinden. Dies ist vor allen Dingen dann zweckmäßig, wenn der fahrbare Behälter nicht bis nahe an die jeweiligen Tränkgefäße herangefahren werden kann. Der Bediener lässt den fahrbaren Behälter an einem geeigneten Ort stehen und ergreift das Abfüllende eines längeren Schlauchs, um nacheinander die Tränkgefäße zu befüllen. Dies kann z. B. mit Hilfe einer geeigneten Abgabepistole erfolgen. Da die Abgabe über die Pumpe am Behälter erfolgt, ist ein entsprechendes Signal an die Pumpensteuerung abzugeben. Daher kann an dem Abgabeende des Schlauchs auch ein Bedienelement angeordnet sein, dessen Betätigung zu einem Signal führt, da es auf geeignete Weise zum Behälter übertragen wird. Dies kann beispielsweise durch eine am Schlauch angebrachte Signalleitung der Fall sein oder über eine in den Schlauch eingearbeitete Signalleitung. Alternativ kann auch eine Funkübertragung zwischen dem Abgabeende und dem Behälter stattfinden, um ein entsprechendes Startsignal für das Pumpenaggregat zu erzeugen.

Die Abgabevorrichtung enthält entweder einen Schlauch mit Abfüllpistole oder ein galgenartiges Rohr, das wahlweise nach außen geschwenkt werden kann zur Abgabe der Milch in bereitstehende Behälter. In diesem Zusammenhang sieht die Erfindung vor, dass am Auslauf der Pistole oder des Schwenkrohrs ein federbelastetes Ventil vorgesehen ist, das erst öffnet, wenn die Pumpe einen gewissen Druck aufgebaut hat. Wird die Pumpe abgeschaltet, schließt das Ventil. Dadurch wird wirkungsvoll das Nachtropfen verhindert, wenn der Landwirt nach dem Befüllen eines Gefäßes zum nächsten weiterfährt. Während der Reinigung ist zweckmäßigerweise das Ventil auf freien Durchgang zu stellen, wodurch es zu diesem Zweck eine manuelle Handhabe aufweist, um das Ventilglied in Offenstellung zu bringen.

Bei größeren Milchmengen kann es zweckmäßig sein, den Milchwagen durch ein kleines Zugfahrzeug zu bewegen. In diesem Zusammenhang sieht die Erfindung vor, dass im Zugfahrzeug eine Bedieneinrichtung vorgesehen ist, die über ein Kabel oder dergleichen mit der Steuervorrichtung am Milchwagen koppelbar ist. Somit kann vom Zugfahrzeug aus die Abgabe der Milch gesteuert werden. Der Landwirt kann auf dem Zugfahrzeug sitzend entlang einer Reihe von Gefäßen fahren und diese dann in geeigneter Weise dosiert befüllen. Am Ende wird dann das Schwenkrohr, mit dem in diesem Falle bevorzugt gearbeitet wird, in eine Stellung zurückgeschwenkt, die ein weiteres Fahren nicht behindert. Dieses Verschwenken kann durch einen Schwenkantrieb erfolgen, der am Milchwagen bzw. am Behälter angebracht ist und der ebenfalls über die Bedieneinrichtung vom Zugfahrzeug aus betätigt werden kann.

Alternativ kann der fahrbare Milchbehälter auch direkt mit einem Antrieb ausgestattet werden, z.B. einem Elektroantrieb, der aus einer Batterie versorgt wird.

Die Erfindung soll nachfolgend anhand von eines in Zeichnungen dargestellten Ausführungsbeispiels näher erläutert werden.
- Fig. 1: zeigt die Seitenansicht eines fahrbaren Milchbehälters nach der Erfindung.
- Fig. 2: zeigt ein Blockschaltbild für die Steuerung des Milchbehälters.
- Fig. 3: zeigt perspektivisch die Handhabe nach Fig. 1 mit einem Bedienelement.
- Fig.4: zeigt schematisch einen längeren Abfüllschlauch für den Behälter nach Fig. 1.
- Fig. 5: zeigt eine alternative Abgabemöglichkeit aus einem Behälter nach Fig. 1.

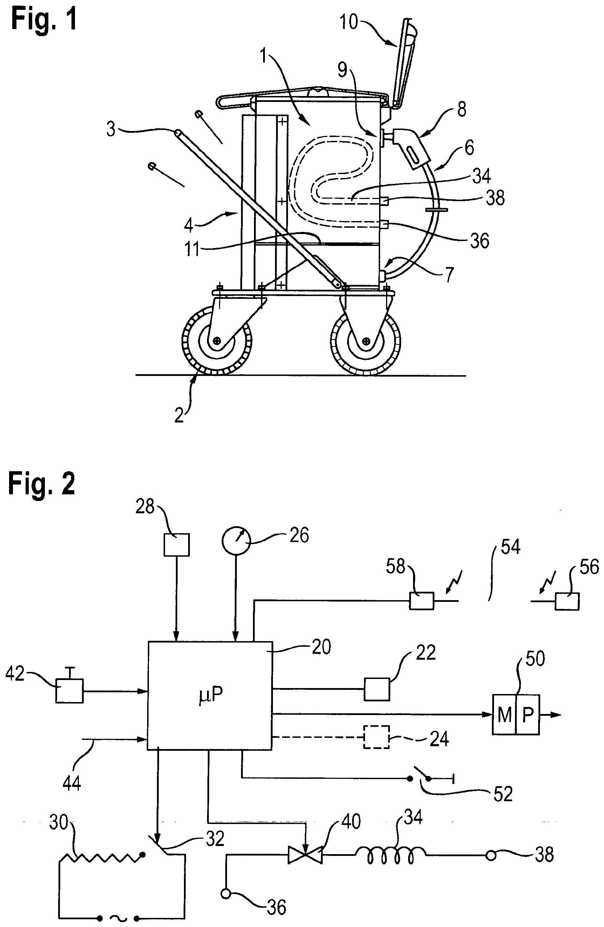

In Fig. 1 ist ein Milchwagen dargestellt mit einem Behälter 1, der über ein Fahrgestell auf Rädern 2 steht, so dass sich ein fahrbarer Wagen ergibt. Zum Handhaben des Wagens sind höhenverstellbare Handgriffe 3 vorgesehen. An der den Handgriffen zugewandten Seite des Behälters 1 befindet sich ein Kasten 4 für die Steuerung von Aggregaten des Behälters, worauf weiter unten noch eingegangen wird. Am Kasten können Bedienelemente für eine nicht gezeigte Dosiersteuerung in griffgünstiger Höhe angeordnet werden.

Ein Schlauch 6 verbindet einen Anschlussstutzen 7 mit einer Zapfpistole 8. Der Anschluss ist seinerseits mit einem nicht gezeigten Pumpenaggregat unterhalb des Bodens des Behälters 1 verbunden. Die Zapfpistole 8 hat einen Handgriff und am vorderen Bereich ein konisch auslaufendes Rohr, mit dem Milch abgegeben werden kann. Die Zapfpistole 8 ist in einer Position dargestellt, in der das konische Rohr in einen Anschluss 9 eingesteckt ist, der einen Durchgang zum Innenraum des Behälters 1 aufweist. Ferner verfügt der Milchwagen über einen Deckel 10 mit Dichtring und einen vom unteren Ende des Behälters 1 beabstandeten Boden 11. In Höhe des Bodens befindet sich ein Anschluss für ein Ladekabel (nicht dargestellt). Im gezeigten Fall ist das Pumpen-aggregat batteriebetrieben. Natürlich kann auch ein Netzanschluss vorgesehen sein.

Die Zapfpistole enthält ein Ventil mit federvorgespanntem Ventilglied, das ab einem vorgegebenen Pumpendruck öffnet (nicht gezeigt). Es kann von einem ebenfalls nicht gezeigten Bedienelement in eine permanente Offenstellung gebracht werden.

In der in Fig. 1 gezeigten Position des Schlauches 1 bzw. der Zapfpistole 8 kann ein Umlauf von Milch bzw. von Flüssigkeit aus dem Tank und in den Tank zurück bewerkstelligt werden. Zu diesem Zweck treibt ein Elektromotor eine Pumpe an, welche in Bodenhöhe die Flüssigkeit absaugt und über den Schlauch 6 nach oben in den Tank zurück transportiert. Es versteht sich, dass dies auch dadurch geschehen kann, dass die Zapfpistole oben über dem Behälter z. B. von Hand gehalten wird. Der Deckel 10 ist dabei geöffnet.

Die Dosierung wird, wie erwähnt, an den Bedienelementen, z.B. über ein Potentiometer eingestellt, und die Steuerung des elektrischen Motors zwecks Dosierzwecken erfolgt über einen nicht gezeigten Mikroprozessor in der Steuerung.

In Fig. 2 ist ein Schaltbild dargestellt für einen Teil der Steuerschaltung im Kasten 4. Ein Mikroprozessor 20 ist mit einem Temperatursensor 22 verbunden sowie mit einem gestrichelt gezeigten Füllstandssensor 24. Außerdem ist ein Zeitgeber 26 vorgesehen sowie ein Mengengeber 28. Der Mengengeber 28 und der Füllstandssensor 24 sind alternativ. Damit kann dem Mikroprozessor 20 die im Behälter 1 befindliche Flüssigkeitsmenge eingegeben werden.

Der Mikroprozessor 20 steuert eine Heizvorrichtung 30, die an eine Energiequelle angeschlossen ist. Dies kann eine Batterie oder auch ein Netzanschluss sein. Ein Schalter 32 wird betätigt, wenn die Heizvorrichtung 30 betrieben werden soll.

Eine Wärmetauscherschlange 34 befindet sich im Behälter 1. Sie weist einen Anschluss 36 für z. B. das Wasser einer Wasserversorgung auf. Sie weist einen weiteren Anschluss 38 auf, der zu einem Ablauf (nicht gezeigt) geführt werden kann. Dem Anschluss 36 ist ein Ventil 40 zugeordnet. Es können auch drei Anschlüsse vorgesehen werden, einer für heißes Wasser, einer für kaltes Wasser und der dritte für den Ablauf. Den ersten beiden ist ein Ventil zugeordnet, um wahlweise den Behälterinhalt zu erwärmen oder zu kühlen.

In Fig. 2 ist ein Motorpumpenaggregat 50 dargestellt, das mit dem Mikroprozessor 20 verbunden ist. Ferner ist ein Schalter 52 dargestellt, dessen Betätigung das Motorpumpenaggregat 50 in Gang setzt, um eine vorgegebene Milchmenge abzugeben. Schließlich ist eine Funkstrecke 54 dargestellt, die zwischen einem Sendeelement 56 und einem Empfangselement 58 liegt. Das Empfangselement 58 ist in geeigneter Weise am Behälter 1 angebracht. Das Sendeelement 56 ist am Ende eines Schlauchs angebracht, der über eine größere Länge verfügt und alternativ zum Schlauch 6 mit dem Behälter 1 verbunden ist.

Die gezeigte Steuerung arbeitet wie folgt: Es sei angenommen, dass die Fütterungszeit morgens 6.00 Uhr ist. Am Vorabend wird der Behälter 1 mit einer Milchmenge gefüllt. Die Milchmenge wird entweder manuell über 28 dem Mikroprozessor übermittelt oder durch den Füllstandsmesser 24 gemessen und ebenfalls dem Mikroprozessor gemeldet. Außerdem wird über den Zeitgeber 26 die Fütterungszeit eingestellt. Der Mikroprozessor 20 ist so ausgelegt, dass er ermittelt, wann mit Hilfe der Heizvorrichtung 30 die Milch auf z. B. 70°C erwärmt werden muss, so dass anschließend während der Fütterungszeit durch abschließende Abkühlung die Milch z. B. die Fütterungstemperatur von 40°C aufweist. Der Temperatursensor 22 misst die Temperatur der Milch ständig, und der Mikroprozessor sorgt dafür, dass z. B. die Pasteurisierungstemperatur über einen vorgegebenen Zeitraum von z. B. 35 Minuten aufrecht erhalten wird. Anschließend wird die Heizvorrichtung 30 abgeschaltet. Zum Aufheizen kann zeitgesteuert auch die Wärmetauscherschlange 34 verwendet werden, indem das zugeordnete Ventil den Heißwasseranschluss mit der Schlange 34 verbindet.

Um die Milch rasch von 70°C auf einen niedrigeren Wert abzukühlen, ist die Kühlschlange 34 mit dem Kaltwasseranschluss 36 verbunden. Nach Ablauf der erwähnten 35 Minuten wird das Ventil 40 geöffnet, und durch die Kühlschlange 34 strömt kühles Wasser und kühlt die Milch rasch auf z. B. 40°C herunter. Sind die 40°C erreicht, wird das Ventil 40 wieder geschlossen, und die Milch befindet sich auf Fütterungstemperatur, und der fahrbare Behälter kann zur Fütterungszeit zu dem gewünschten Fütterungsort transportiert werden. Es versteht sich, dass hierzu die Verbindung der Wärmetauscherschlange 34 von dem einen bzw. beiden Wasseranschlüssen (heiß und kalt) getrennt wird. Ist eine Kabelverbindung zwischen dem Fütterungswagen und dem Netz hergestellt, muß auch diese naturgemäß getrennt werden.

Der Betrieb ist auch ohne Kühlschlange möglich. Dann wird die Milch länger durch die kalte Umgebungsluft abgekühlt. Alternativ kann die Kühlschlange auch zum Aufheizen der Milch verwendet werden, wenn eine ausreichende Warmwassermenge zur Verfügung steht.

Das Pumpenaggregat 50 wird über den Mikroprozessor 20 gesteuert. Zur Abgabe einer vorgegebenen Menge wird ein Bedienelement (Schalter 52) am Behälter 1 bzw. der Steuervorrichtung 4 betätigt. Dies ist durch Pfeil 44 in Fig. 2 angedeutet. Die vorgesehene Menge kann z.B. über ein Potentiometer 42 eingestellt werden. Der Potentiometer 42, das manuell betätigbar ist, gibt die Zeit vor, in der der Motor des Pumpenaggregats eingeschaltet ist. Die Einschaltdauer bestimmt somit die abgegebene Milchmenge.

Schließlich sei erwähnt, dass das in Fig. 1 dargestellte Fahrzeug mit Mitteln versehen werden kann, um von einem hier nicht gezeigten kleinen Zugfahrzeug gezogen zu werden. Das Zugfahrzeug kann mit einer Bedieneinrichtung versehen werden, die über ein koppelbares Kabel mit der Steuervorrichtung 4 verbunden ist. Somit kann der Fahrer des Zugfahrzeugs vom Fahrzeug aus die Abgabe der Milch steuern. In diesem Falle ist jedoch ein schwenkbares Rohr 56 als eine Art Galgen einem Schlauch 6 mit Füllpistole 8 vorzuziehen. Ein derartiges schwenkbares Rohr kann von einem Schwenkantrieb 58 betätigt werden, der ebenfalls vom Fahrzeug aus bedienbar sein kann. Das Rohr ist über eine Drehverbindung 60 mit einem behälterfesten Anschluss verbunden und bei 62 um eine vertikale Achse drehbar gelagert. Am oberen Ende ist ein Ventil 64 vorgesehen, ähnlich dem oben erwähnten Ventil, das eine Lenksicherung bildet.

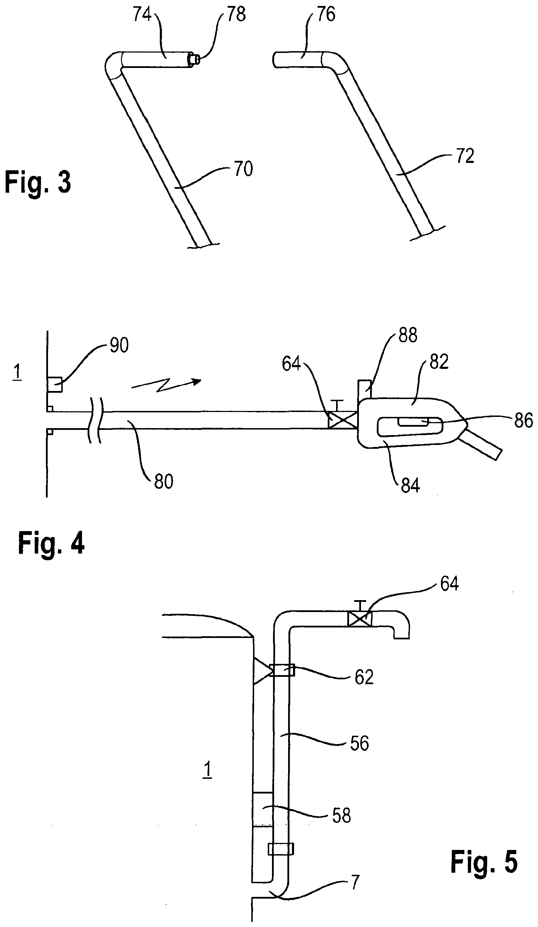

In Fig. 3 sind parallele, schräg nach oben verlaufende, Stangen 70, 72 dargestellt, die auf beiden Seiten des Behälters 1 mit dem fahrbaren Untersatz fest verbunden sind. Am oberen Ende weisen sie hornartige Abschnitte 74, 76 auf, die gleichgerichtet aufeinander zulaufen, jedoch einen Abstand zwischen sich lassen. Am linken Hornabschnitt 24 ist ein Tastelement 78 angebracht, das der Fahrer mit dem Daumen betätigen kann, um eine gewünschte Milchmenge abzugeben, indem er etwa die Pistole 8 nach Fig. 1 in der rechten Hand hält oder den Galgen nach Fig. 5 entweder per Hand oder per Antrieb oberhalb eines Trinkgefäßes schwingt.

In Fig. 4 ist ein längerer Abgabeschlauch 80 angedeutet, der als Beispiel eine Länge bis zu 10 Metern haben kann. Er ist in gleicher Weise wie der Schlauch 6 nach Fig. 1 mit dem Behälter 1 verbunden. Am Ende des Abgabeschlauchs 80 ist eine Abgabepistole 82 angebracht mit einem Griff 84, in dem sich ein Tastelement 86 befindet. An der Abgabepistole 82 ist ein Sendeelement 88 angebracht, das vom Tastelement 86 betätigt wird. Es sendet ein Funksignal entlang der Länge des Schlauchs 80 auf ein Empfangselement 90 am Behälter 1, das mit dem Mikroprozessor 20 in der Fig. 2 verbunden ist. Sende- und Empfangselement 88, 90 entsprechen Sende- und Empfangselement 56, 58 nach Fig. 2. Der Bediener kann sich daher relativ weit vom fahrbaren Behälter 1 entfernen und gleichwohl auf einfache Weise die vorgegebenen Mengen in Tränkgefäße abfüllen.

Das Ventil 64 ist in der Leitung 80 dargestellt. Es kann sich natürlich innerhalb der Abgabepistole 82 befinden, wobei jedoch eine Handhabe vorzusehen ist, um das Ventil außer Funktion zu setzen.

Bei der Erfindung kann zusätzlich eine Pumpe für Reinigungsmittel vorgesehen werden, so dass beim Spülen des Milchbehälters einfach Reinigungsmittel zugegeben werden kann. Denkbar ist auch eine automatische Reinigung.

## Patentansprüche

1. Fahrbarer Milchwagen für die Nutztieraufzucht, insbesondere von Kälbern, mit einem Fahrgestell, auf dem ein Milchbehälter (1) angeordnet ist, der nach oben von einem Deckel (10) verschließbar ist, einem Temperatursensor (22), der die Temperatur der Milch misst, einer Pumpe, deren Ansaugseite mit dem Milchbehälter (1) in Bodennähe und deren Abgabeseite mit einer Leitung verbunden ist zwecks Entnahme der Milch, und einer Steuervorrichtung an der Außenseite des Milchbehälters (1) zur Steuerung eines elektrischen Motors für die Pumpe, **dadurch gekennzeichnet, dass** der Milchwagen eine Heizvorrichtung (30) zur Erwärmung der Milch im Milchbehälter (1) aufweist, und dass die Steuervorrichtung zur Steuerung der Heizvorrichtung (30) vorgesehen ist und einen Mikroprozessor (20) aufweist, mit dem der Temperatursensor (22) und die Heizvorrichtung (30) verbunden sind, und mit dem Mikroprozessor (20) schließlich ein Zeitgeber (26) derart verbunden ist, dass die Heizvorrichtung (30) die Milch von einem vorgegebenen ersten Zeitpunkt an auf eine vorgegebene Pasteurisierungstemperatur aufheizt und auf dieser Pasteurisierungstemperatur eine vorgegebene Zeit hält und die Milch zu einem zweiten, späteren Zeitpunkt eine vorgegebene Fütterungstemperatur aufweist, wobei zum Eingeben einer im Milchbehälter (1) befindlichen Flüssigkeitsmenge ein Mengengeber (28) oder ein Füllstandssensor (24) mit dem Mikroprozessor (20) verbunden ist.

2. Fahrbarer Milchwagen nach Anspruch 1, **dadurch gekennzeichnet, dass** mit dem Mikroprozessor (20) ferner eine Mengeneinstellvorrichtung (24, 28) verbunden ist, über die ein Mengensignal für das abzugebende Milchvolumen aus dem Milchbehälter (1) eingegeben wird.

3. Fahrbarer Milchwagen nach Anspruch 1 oder 2, **dadurch gekennzeichnet, dass** im Milchbehälter (1) eine Wärmetauscherschlange (34) angeordnet ist und der Milchbehälter (1) zwei Anschlüsse (36, 38) aufweist, von denen einer ein steuerbares Ventil (40) aufweist und mit einem Wasseranschluss und der andere mit einem Wasserablauf verbindbar ist und das steuerbare Ventil (40) vom Mikroprozessor (20) geöffnet wird, wenn von der Heizvorrichtung (30) die Pasteurisierungstemperatur eine vorgegebene Zeit aufrecht erhalten hat, und das Ventil (40) geschlossen wird, wenn die Fütterungstemperatur erreicht ist.

4. Fahrbarer Milchwagen nach einem der Ansprüche 1 bis 3, **dadurch gekennzeichnet, dass** nach Maßgabe des Temperatursignals vom Temperatursensor (22) der Mikroprozessor (20) die Heizvorrichtung (30) so ansteuert, dass die Milch nach Erreichen der Fütterungstemperatur auf dieser gehalten wird.

5. Fahrbarer Milchwagen nach einem der Ansprüche 1 bis 4, **dadurch gekennzeichnet, dass** im Milchbehälter (1) ein Füllstandssensor (24) angeordnet ist, der mit dem Mikroprozessor (20) verbunden ist.

6. Fahrbarer Milchwagen nach einem der Ansprüche 1 bis 5, gekennzeichnet durcheine deichselartige Handhabe zum Ziehen und/oder Schieben des Milchwagens und dadurch, dass an der Handhabe ein Bedienelement (78) für einen Schalter (52) für die Milchabgabe angeordnet ist.

7. Fahrbarer Milchwagen nach Anspruch 6, **dadurch gekennzeichnet, dass** die Handhabe am Milchbehälter (1) schräg angebrachte parallele Stangen (70, 72) aufweist, die am oberen Ende hornartige Griffabschnitte (74, 76) aufweisen, die einen Abstand zwischen sich freilassen, wobei das Bedienelement (78) am freien Ende eines Hornabschnitts (74) angeordnet ist.

8. Fahrbarer Milchwagen nach einem der Ansprüche 1 bis 7, **dadurch gekennzeichnet, dass** mit dem Milchbehälter (1) ein längerer Schlauch (80) verbunden ist, an dessen Ende eine Abgabevorrichtung (82) angeordnet ist und an der Abgabevorrichtung (82) ein Bedienelement (86) angeordnet ist für einen Schalter für die Milchabgabe und das Bedienelement (86) über eine Signalstrecke mit dem Mikroprozessor (20) verbunden ist.

9. Milchwagen nach Anspruch 8, **dadurch gekennzeichnet, dass** die Signalstrecke eine Funkstrecke ist.

## Claims

1. A drivable milk truck for livestock breeding, in particular for calves, having a chassis on which a milk container (1) is arranged that can be closed at the top by a cover (10), a temperature sensor (22) that measures the temperature of the milk, a pump, the suction side of which is connected to the milk container (1) close to the bottom, and the dispensing side of which is connected to a line to remove the milk, and a control device on the outside of the milk container (1) to control an electric motor for the pump, **characterized in that** the milk truck has a heating device (30) for heating the milk in the milk container (1), and the control device is provided to control the heating device (30) and has a microprocessor (20) to which the temperature sensor (22) and the heating device (30) are connected, and finally, a timer (26) is connected to the microprocessor (20) such that the heating device (30) heats the milk starting at a given first time up to a given pasteurization temperature, and holds the milk at this pasteurization temperature for a given time, and the milk has a given feeding temperature at a second, later time, wherein to add an amount of liquid located in the milk container (1), a dispenser (28) or a level sensor (24) is connected to the microprocessor (20).

2. The drivable milk truck according to claim 1, **characterized in that** a quantity adjusting device (24, 28) is connected to the microprocessor (20), by means of which a quantity signal is entered for the milk volume to be dispensed from the milk container (1).

3. The drivable milk truck according to claim 1 or 2, **characterized in that** a heat exchanger coil (34) is arranged in the milk container (1), and the milk container (1) has two connections (36, 38) of which one has a controllable valve (40) and is connectable to a water connection, and the other is connectable to a water drain, and the controllable valve (40) is opened by the microprocessor (20) when the heating device (30) has maintained the pasteurization temperature for a given time, and the valve (40) is closed when the feeding temperature is reached.

4. The drivable milk truck according to one of claims 1 to 3, **characterized in that** according to the temperature signal from the temperature sensor (22), the microprocessor (20) controls the heating device (30) such that the milk is held at the feeding temperature once the feeding temperature is reached.

5. The drivable milk truck according to one of claims 1 to 4, **characterized in that** a level sensor (24) is arranged in the milk container (1) and is connected to the microprocessor (20).

6. The drivable milk truck according to one of claims 1 to 5, **characterized by** a tow barlike handle for pulling and/or pushing the milk truck, and **characterized in that** a control element (78) is arranged on the handle for a switch (52) for dispensing the milk.

7. The drivable milk truck according to claim 6, **characterized in that** the handle on the milk container (1) has obliquely attached parallel rods (70, 72) that have horn-like grip sections (74, 76) on the top end and leave open a space between them, wherein the control element (78) is arranged on the free end of a horn section (74).

8. The drivable milk truck according to one of claims 1 to 7, **characterized in that** a longer hose (80) is connected to the milk container (1) and a dispensing device (82) is arranged on its end, and a control element (86) is arranged on the dispensing device (82) for a switch for dispensing milk, and the control element (86) is connected to the microprocessor (20) via a signal path.

9. The milk truck according to claim 8, **characterized in that** the signal path is a radio path.

## Revendications

1. Chariot à lait roulant pour l'élevage d'animaux de la ferme, en particulier de veaux, doté d'un châssis sur lequel un récipient à lait (1) est disposé, lequel peut être fermé vers le haut par un couvercle (10), d'un capteur de température (22) qui mesure la température du lait, une pompe dont le côté aspiration est relié au récipient à lait (1) au niveau du sol et dont le côté distribution est relié à une conduite dans le but de soutirer le lait, et d'un dispositif de commande sur le côté externe du récipient à lait (1) pour commander un moteur électrique de la pompe, **caractérisé en ce que** le chariot à lait présente un dispositif de chauffage (30) pour chauffer le lait dans le récipient à lait (1), et que le dispositif de commande est prévu pour commander le dispositif de chauffage (30) et présente un microprocesseur (20), auquel le capteur de température (22) et le dispositif de chauffage (30) sont reliés, et qu'une horloge (26) enfin est reliée au microprocesseur (20) de sorte que le dispositif de chauffage (30) chauffe le lait à une température de pasteurisation prédéfinie à partir d'un premier instant prédéfini et le maintient à cette température de pasteurisation pendant une durée prédéfinie, et que le lait présente une température d'alimentation prédéfinie à un second instant ultérieur, dans lequel un transmetteur débitmétrique (28) ou un capteur de niveau (24) est relié au microprocesseur (20) pour saisir une quantité de liquide se trouvant dans le récipient à lait (1).

2. Chariot à lait roulant selon la revendication 1, **caractérisé en ce qu'**un dispositif de réglage de quantité (24, 28) permettant de saisir un signal de quantité applicable au volume de lait à distribuer depuis le récipient à lait (1) est de plus relié au microprocesseur (20).

3. Chariot à lait roulant selon la revendication 1 ou 2, **caractérisé en ce qu'**un serpentin d'échangeur de chaleur (34) est disposé dans le récipient à lait (1) et le récipient à lait (1) présente deux raccords (36, 38), dont l'un présente une soupape pouvant être commandée (40) et peut être relié à une prise d'eau et l'autre peut être relié à un écoulement d'eau, et la soupape pouvant être commandée (40) est ouverte par le microprocesseur (20) lorsque la température de pasteurisation a été maintenue pendant une durée prédéfinie par le dispositif de chauffage (30) et la soupape (40) est fermée lorsque la température d'alimentation est atteinte.

4. Chariot à lait roulant selon une des revendications 1 à 3, **caractérisé en ce que** le microprocesseur (20) commande le dispositif de chauffage (30) conformément au signal de température du capteur de température (22) de sorte que le lait est maintenu à la température d'alimentation une fois celle-ci atteinte.

5. Chariot à lait roulant selon une des revendications 1 à 4, **caractérisé en ce qu'**un capteur de niveau (24) relié au microprocesseur (20) est disposé dans le récipient à lait (1).

6. Chariot à lait roulant selon une des revendications 1 à 5, **caractérisé par** une manette de type timon pour tirer et/ou pousser le chariot à lait et en ce qu'un élément de réglage (78) d'un commutateur (52) servant à la distribution de lait est disposé sur la manette.

7. Chariot à lait roulant selon la revendication 6, **caractérisé en ce que** la manette présente des barres parallèles (70, 72) montées en biais sur le récipient à lait (1), qui comportent des parties de poignée de type corne (74, 76) à l'extrémité supérieure, qui laissent un espacement libre entre elles, dans lequel l'élément de réglage (78) est disposé sur l'extrémité libre d'une partie de corne (74).

8. Chariot à lait roulant selon une des revendications 1 à 7, **caractérisé en ce qu'**un tuyau relativement long (80) est relié au récipient à lait (1), à l'extrémité duquel un dispositif de distribution (82) est disposé et un élément de réglage (86) est disposé sur le dispositif de distribution (82) pour un commutateur servant à la distribution de lait, et l'élément de réglage (86) est relié au microprocesseur (20) par le biais d'un circuit de transmission de signaux.

9. Chariot à lait selon la revendication 8, **caractérisé en ce que** le circuit de transmission de signaux est une liaison radio.
